(19) **Europäisches Patentamt / European Patent Office / Office européen des brevets**

(11) **EP 2 850 037 B1**

(12) **FASCICULE DE BREVET EUROPEEN**

(45) Date de publication et mention de la délivrance du brevet:
**17.04.2019 Bulletin 2019/16**

(51) Int Cl.:
**C04B 7/32** (2006.01)   **C04B 28/06** (2006.01)
**C04B 111/00** (2006.01)

(21) Numéro de dépôt: **13727283.7**

(22) Date de dépôt: **13.05.2013**

(86) Numéro de dépôt international:
**PCT/FR2013/051045**

(87) Numéro de publication internationale:
**WO 2013/171419 (21.11.2013 Gazette 2013/47)**

(54) **PROCÉDÉ DE TRAITEMENT DE SOLS POLLUES EN UTILISANT UN NOUVEAU LIANT HYDRAULIQUE A BASE DE CLINKER SULFO-ALUMINEUX**

**VERFAHREN ZUR BEHANDLUNG VERUNREINIGTER BÖDEN UNTER VERWENDUNG EINES NEUARTIGEN, AUF SULFOALUMINAT BASIERENDEN HYDRAULISCHEN BINDEMITTELS**

**PROCESS FOR TREATING POLLUTED SOILS UPON USING A NOVEL SULFOALUMINATE CLINKER BASED HYDRAULIC BINDER**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.05.2012 FR 1254395**

(43) Date de publication de la demande:
**25.03.2015 Bulletin 2015/13**

(60) Demande divisionnaire:
**17159769.3 / 3 202 741**

(73) Titulaire: **Ciments Français**
**92800 Puteaux (FR)**

(72) Inventeurs:
• **MOUDILOU, Emmanuel**
  **F-27640 Breuilpont (FR)**
• **GUERANDEL, Cyril**
  **F-75018 Paris (FR)**
• **LE ROLLAND, Bruno**
  **F-78250 Oinville sur Montcient (FR)**
• **DELAIR, Stéphanie**
  **F-Poissy 78300 (FR)**

(74) Mandataire: **Le Cloirec, Claudine et al**
**Ipsilon**
**3, rue Edouard Nignon**
**44300 Nantes (FR)**

(56) Documents cités:
EP-A1- 1 306 356   EP-A1- 1 384 704
EP-A2- 0 353 062   EP-A2- 0 439 372
EP-A2- 1 775 270   WO-A1-2010/043495
FR-A1- 2 807 424   FR-A1- 2 841 897
FR-A1- 2 868 772   FR-A1- 2 901 270
GB-A- 1 345 586   GB-A- 2 175 295

EP 2 850 037 B1

**Description**

La présente invention concerne un nouveau procédé mettant en oeuvre un liant hydraulique sulfo-alumineux, et son utilisation dans le cadre du traitement de sols pollués.

La présente invention a pour objet un procédé mettant en oeuvre un liant hydraulique contenant des phases minéralogiques le plaçant dans la catégorie des liants sulfo-alumineux. La présente invention a également pour objet l'utilisation de ce liant pour le traitement d'un matériau, notamment d'un sol ou d'une terre, polluée ou contaminée par des espèces chimiques ioniques ou des métaux lourds. Le matériau traité reste meuble mais la lixiviation des espèces polluantes est réduite.

La mise en décharge de sols contaminés par des agents polluants, notamment des sols provenant de sites industriels, obéit à une règlementation stricte (Directive 1999/31/CE du Conseil du 26 avril 1999 et Décision n° 2003/33/CE du 19/12/02). Les modalités de mise en décharge de ces sols sont déterminées selon leurs classes de pollution. Ces classes vont de la classe I (déchets dangereux) à la classe III (déchets inertes). Plus un sol est considéré comme dangereux, plus sa mise en décharge entraine des contraintes et en conséquence un coût élevé. Afin de pouvoir stocker en décharge ces sols contaminés, au moindre coût, il convient d'en abaisser la classe de dangerosité. Cette modification de la classe de dangerosité peut en particulier être obtenue en abaissant le taux d'agents polluants lixiviables contenus dans le sol.

Abaisser la classe de dangerosité peut également permettre de réemployer les sols ainsi traités, par exemple dans des sous couches routières ou dans des remblais (en accord avec le guide SETRA "Acceptabilité de matériaux alternatifs en technique routière. Evaluation environnementale." Mars 2011).

Dans le langage cimentier, les composés primaires sont représentés par C pour CaO, S pour $SiO_2$, A pour $Al_2O_3$, \$ pour $SO_3$, H pour $H_2O$, qui seront utilisés dans l'ensemble du présent texte.

Des liants hydrauliques sont déjà utilisés pour le traitement d'effluents industriels (déchets liquides) et de résidus d'incinération sous une forme finement divisée, notamment pour piéger certains anions.

C'est le cas notamment des liants hydrauliques commercialisés par la société Kerneos sous le nom commercial LSR et décrits dans le brevet européen EP 0 588 689 qui sont des ciments alumineux. Les phases minéralogiques majoritaires de ces ciments alumineux sont CA ou CA et $C_{12}A_7$ ou $C_3A$ et $C_{12}A_7$.

Les déchets finement divisés sont d'abord traités avec un liant alumineux contenant trois phases majoritaires $C_3A$, $C_{12}A_7$ et CaO. Le produit traité ainsi obtenu est ensuite concassé et les granulats sont enrobés dans un ciment de type Portland pour améliorer leur résistance à la lixiviation. Ce procédé nécessite donc une quantité importante de liant d'enrobage. En outre le brevet divulgue la teneur finale en chlorures du lixiviat après 28 jours de durcissement, mais ne donne aucune information sur la teneur en ions sulfate. Deux types de liants alumineux sont décrits comprenant les phases respectives $C_3A/C_{12}A_7/CaO$ en proportions 20/80/0 et 80/0/20. Aucune référence n'est faite à une phase $C_4A_3$\$.

On connait également des liants destinés notamment à l'inertage et au traitement de sols pollués commercialisés par la société Holcim sous le nom commercial Inercem. Ces liants sont des mélanges de clinker (Portland) et de laitier de haut fourneau. Les différents produits sont : Inercem P (plus de 65 % de clinker et moins de 20% de laitier), Inercem S (plus de 80% de laitier et plus de 10 % de clinker), et Inercem à mi chemin entre les deux produits précédents (moins de 30 % de clinker et plus de 60 % de laitier). Ces produits sont décrits dans la brochure commerciale : « Inercem Liants hydrauliques pour stabilisation des déchets courants », (Holcim Belgique, février 2009).

Document WO2010/043495 divulgue un liant hydraulique à base de clinker sulfo-alumineux, ledit clinker comprenant les phases minéralogiques 40 - 80 % Yeelimite C4 A3 \$ et 15 - 25 % Bélite C2 S, mais pas des phases minéralogiques Mayenite C12 A7 et chaux libre CaO. Ce liant est utilisé dans une région portuaire, où beaucoup de polluants se rassemblent dans l'argile marine; ces polluants sont immobilisés. Document FR2901270 divulgue un liant hydraulique à base de clinker sulfo-alumineux, ledit clinker comprenant les phases minéralogiques 72,8 % Yeelimite C4 A3 \$, 3,1 % Mayenite C12 A7 et 13,4 % Bélite C2 S, mais pas de chaux libre CaO. Ce liant est utilisé pour immobiliser les déchets aqueux contenant du bore.

Il apparait que ces liants ne sont pas suffisamment efficaces pour piéger les ions sulfate lorsque le sol à traiter est pollué par de tels anions facilement lixiviables qui sont relargués dans les eaux de pluie ou d'infiltration.

Un premier but de l'invention est donc de proposer un procédé mettant en oeuvre un liant hydraulique apte à piéger les anions tels que les ions sulfate et les ions chlorure et/ou les métaux lourds présents dans des matériaux contaminés, notamment des sols pollués, et limiter leur lixiviation.

Un autre but de l'invention est de proposer un procédé mettant en oeuvre un liant hydraulique permettant le traitement et l'inertage d'un sol pollué en une seule étape et *in situ*, c'est-à-dire ne nécessitant pas le transfert sur un autre lieu.

Encore un but de l'invention est de proposer un procédé permettant le traitement et l'inertage d'un sol pollué avant sa mise en décharge.

Un autre but de l'invention est donc de proposer un procédé apte à traiter le sol pollué par addition de liant hydraulique en quantité faible, permettant de diminuer le coût du traitement par rapport aux liants et aux procédés de mise en oeuvre de l'art antérieur.

A cet effet, la présente invention propose un procédé conforme à la revendication 1. Le liant hydraulique à base de clinker sulfo-alumineux, ledit clinker comprend les phases minéralogiques Yeelimite $C_4A_3\$$, Mayenite $C_{12}A_7$, de la chaux libre CaO et éventuellement de la Bélite $C_2S$,
la Yeelimite ne représentant pas plus de 50% de la masse du clinker, et le rapport massique entre les phases Mayenite $C_{12}A_7$ et Yeelimite $C_4A_3\$$ étant compris entre 0,1 et 10.

De manière avantageuse, le clinker sulfo-alumineux comprend de 5% à 50% massique de phase Mayenite $C_{12}A_7$, le rapport massique entre les phases Mayenite $C_{12}A_7$ et Yeelimite $C_4A_3\$$ étant compris entre 0,1 et 2,5.

Comme nous le verrons plus loin, ce liant hydraulique qui renferme un clinker sulfo-alumineux (et non un clinker alumineux comme les produits LSR) est apte à être utilisé pour la stabilisation des sols pollués, afin de créer des espèces chimiques stables, notamment de l'ettringite, mais également de la stratlingite, de l'hydrocalumite, au sein des dits sols. L'utilisation de ce liant peut ainsi permettre de traiter *in situ* un sol contaminé et de le faire changer de classe d'admission en décharge.

Par clinker sulfo-alumineux il faut comprendre un clinker qui renferme au minimum 20 % de phase minéralogique $C_4A_3\$$.

Il est à noter que la phase minéralogique $C_{12}A_7$ est une phase que l'on retrouve habituellement dans les liants alumineux. Dans le cadre des liants sulfo-alumineux, la phase $C_{12}A_7$ est considérée par l'homme de l'art comme un intermédiaire de cuisson, indiquant que les conditions de cuisson du cru ne sont pas optimales. Le produit principal que cherche à obtenir l'homme de l'art pour les clinkers sulfo-alumineux est la phase minéralogique $C_4A_3\$$, et non pas la phase $C_{12}A_7$. Le liant hydraulique selon la présente invention est un produit qui serait considéré en temps normal comme "imparfait" par l'homme du métier.

Dans le cadre de la présente invention la phase $C_{12}A_7$ englobe toute structure isotype de $C_{12}A_7$, comme par exemple $C_{11}A_7$. $CaF_2$ dont la structure résulte d'une substitution d'ions $O^{2-}$ par des ions $F^-$. Dans la suite de la description et des revendications, par $C_{12}A_7$, il faut comprendre $C_{12}A_7$ ou toute structure isotype.

Les principales phases minéralogiques actives de ce clinker sulfo-alumineux sont la yeelimite $C_4A_3\$$, la mayenite $C_{12}A_7$ et la chaux CaO. La bélite, éventuellement aussi présente, contribue à la résistance mécanique du matériau traité avec ce liant et participe à la dépollution du matériau (sol traité) par la stabilisation chimique des produits d'hydratation des composés sulfo-alumineux.

De préférence le liant hydraulique renferme un clinker sulfo-alumineux qui comprend de 5% à 50% massique de phase Mayenite $C_{12}A_7$.
Le liant hydraulique renferme un clinker sulfoalumineux qui peut comprendre de 10% à 40% massique de phase Bélite $C_2S$.

Le liant hydraulique renferme un clinker sulfo-alumineux qui peut comprendre en outre jusqu'à 5% massique de phase CaO, $SO_2$ (C$).

Il s'avère que les propriétés "dépolluantes" du liant hydraulique dans le procédé selon la présente invention sont encore améliorées lorsque dans le clinker le rapport massique entre les phases Mayenite $C_{12}A_7$ et Yeelimite $C_4A_3\$$ est compris entre 0,1 et 2,5, de préférence entre 0,15 et 1,5.

De préférence le liant hydraulique est à base de clinker sulfo-alumineux qui renferme moins de 0,5% massique de phase CaO, $2Al_2O_3(CA_2)$ et moins de 0,5% massique de phase 2CaO, $Al_2O_3$, $SO_3(C_2AS)$..

De préférence le liant hydraulique est à base de clinker sulfo-alumineux qui renferme plus de 10% massique de Mayenite $C_{12}A_7$.

De manière triviale, le clinker sulfo-alumineux décrit ci-dessus peut être obtenu par cuisson de minéraux dans un four de cimenterie ; mais il peut également être obtenu par mélange de différentes sources de clinker, voir même par ajout de phases minéralogiques pures à un clinker sulfoalumineux industriel afin de l'enrichir en phases minéralogiques, notamment en Yeelimite et en Mayenite.

Le liant hydraulique mis en oeuvre dans le procédé de la présente invention s'est révélé particulièrement efficace lorsqu'il est constitué exclusivement du clinker sulfo-alumimeux tel que décrit précédemment.

Il est également efficace pour traiter des sols pollués lorsqu'il renferme au moins 10%, notamment au moins 20%, de préférence au moins 30%, massique dudit clinker sulfo-alumineux, et un ou plusieurs composé(s) choisi(s) parmi du ciment, du clinker Portland, de la chaux, notamment de la chaux vive, un filler (composé inerte chimiquement) des additions à effet pouzzolanique (ayant un rôle dans le développement des résistances à long terme) telles que du laitier, de la cendre volante, de la fumée de silice, de la pouzzolane, et éventuellement un ou plusieurs adjuvants tels qu'un accélérateur de prise et/ou un réducteur de chrome.

Avantageusement le liant hydraulique renferme de la chaux vive, notamment moins de 50%, de préférence de 5 à 30 %, encore préférentiellement de 10 à 20 % massique de chaux.

Avantageusement le liant hydraulique ne renferme pas de fibres, notamment des fibres métalliques.

Préférentiellement ledit liant renferme moins de 30% massique, de préférence moins de 10% massique, encore de préférence moins de 5% massique, de clinker Portland.

Avantageusement le liant hydraulique renferme plus de 2%, de préférence plus de 5%, encore préférentiellement plus de 10% massique de Yeelimite.

Avantageusement le liant hydraulique renferme plus de 2%, de préférence plus de 5%, encore préférentiellement plus de 10% massique de Mayenite.

De préférence, le procédé de traitement de sols pollués selon la présente invention comprend le mélange du dit sol avec le liant hydraulique, dans des proportions massiques sol/liant comprises entre 1 et 20 parties, de préférence de 2 à 20 parties, de préférence encore de 5 à 20 parties, de préférence encore de 5 à 10 parties de liant pour 100 parties de sol.

Le sol ainsi traité reste facilement manipulable (pelletable, transportable). Il n'est pas nécessaire de lui adjoindre une étape complémentaire d'enrobage pour limiter le relarguage des anions tels que les chlorures ou sulfates.

De préférence, le procédé de traitement est adapté au traitement de sol renfermant une teneur en eau inférieure à 40%, notamment inférieure à 30%, préférentiellement inférieure à 20% massique d'eau.

Le procédé de la présente invention trouve une utilisation intéressante pour la stabilisation de sols pollués *in situ* ou avant mise en décharge, sols pollués notamment par des ions sulfate et/ou des ions chlorure et/ou des cations de métaux lourds.

Le matériau ainsi traité peut ensuite être réemployé dans des sous-couches routières ou dans des remblais.

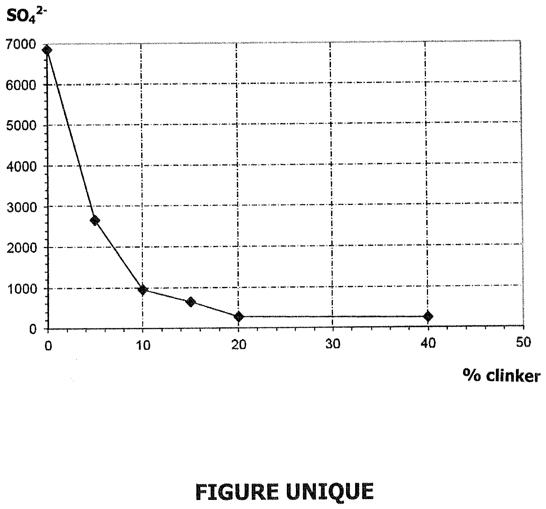

La présente invention va être décrite plus en détail dans les exemples de réalisation non limitatifs ci-après en relation avec la figure unique annexée qui schématise la variation de la teneur en ions sulfate dans le lixiviat en fonction du pourcentage massique en liant hydraulique.

**EXEMPLES**

**1- Préparation des clinkers**

Les clinkers, mis en oeuvre dans le procédé de la présente invention, sont préparés par cuisson à haute température d'un cru composé notamment de calcaire, gypse, argile et bauxite qui sont des mélanges de différentes oxydes, notamment $CaO$, $SiO_2$, $Al_2O_3$, $Fe_2O_3$ et SO3. L'art de composer ce cru est bien connu de l'homme du métier (Special Inorganic Cement, Ivan Older, 2000, E&FN Spon, New York).

Il est important de noter que dans le cadre de la présente invention, les matières premières constituant le cru (mélange des minéraux avant cuisson) sont dosées pour obtenir un liant hydraulique sulfo-alumineux et non pas un liant hydraulique alumineux.

Les proportions globales de ces différents oxydes sont déterminées à partir de trois modules pilotant la saturation en chaux (Cm), la distribution des sulfates (Ps) et le caractère alumineux (N).

Le module Cm doit être proche de 1.

Le module Ps doit être inférieur à 3,82.

Le module N doit être inférieur à 2.

Dans le cas présent, la synthèse du clinker est effectuée par voie semi-humide.

Le cru est malaxé avec de l'eau (environ 10% en masse) pour obtenir une pâte modelable, puis est mis manuellement sous forme de "boudins" de longueur et de diamètre de l'ordre de 25 cm et 3 cm respectivement. Le cru ainsi mis en forme est conservé à 110°C pendant 12 heures environ.

Le cru est ensuite cuit dans un four à moufle à 1300°C pendant 1 heure environ, pour obtenir le clinker. Le clinker est refroidi à l'air ambiant, puis broyé pour obtenir une finesse Blaine de environ 4000 cm$^2$/g et une granulométrie inférieure à 40 micromètres environ. Les compositions minéralogiques de trois clinkers sulfo-alumineux selon l'invention sont présentées dans le Tableau 1 (en % massique).

**Tableau 1**

|  | Clinker 1 | Clinker 2 | Clinker 3 |
|---|---|---|---|
| $C_4A_3\$$ | 31,6 | 24,4 | 26,3 |
| C2S | 29 | 22,4 | 24,1 |
| C$ | 3,1 | 2,4 | 2,6 |
| $C_{12}A_7$ | 9,8 | 30,7 | 25 |
| $C_4AF$ | 11 | 8,5 | 9,2 |
| CT | 2,3 | 1,8 | 1,9 |

(suite)

| | Clinker 1 | Clinker 2 | Clinker 3 |
|---|---|---|---|
| MgO | 1,7 | 1,4 | 1,4 |
| C | 1,2 | 0,9 | 1 |
| CaCO3 | 3 | 2,3 | 2,5 |

## 2- Procédé de traitement

Le procédé de traitement selon l'invention d'un matériau contaminé (tel qu'un sol pollué), par un liant hydraulique sulfo-alumineux à base de clinker sulfo-alumineux a été mis en oeuvre selon les étapes suivantes :

Une quantité de terre brute est tamisée à 4 mm (Tamis Saulas, France, certifié NF ISO 3310) de manière à obtenir 1 kg de terre à traiter (matériau contaminé).

1 kg de terre tamisée à traiter (matériau contaminé) est placé dans un malaxeur (MLX40D, CAD France) en présence d'une quantité de liant hydraulique sulfo-alumineux déterminée, exprimée en % massique de liant par rapport à la masse de matériau contaminé.

Le mélange terre/liant subit alors une étape d'homogénéisation par mélange à vitesse faible (140 tours/minute) pendant 1 minute. Puis l'eau est ajoutée selon un rapport massique eau/ liant égal à 1.

L'ensemble est alors mélangé à vitesse lente pendant 2 minutes puis 2 minutes à vitesse rapide (285 tours/minute). L'ensemble du contenu du malaxeur est alors déversé dans un sac plastique (sac en Polyethylène, 3 litres) puis fermé hermétiquement de manière à simuler un stockage en tas. La maturation de la terre traitée est réalisée sur une durée de 1 semaine à température ambiante.

Le matériau traité est ensuite séché à 40°C à l'étuve puis éventuellement concassé (BB 200 Wolframcarbid, RETSCH Allemagne) à une granulométrie < 4 mm pour réaliser les essais de lixiviation.

## 3- Procédé de Lixiviation

Conformément à la Directive précitée qui définit les classes de dangerosités, la norme NF EN-12457-2 a été utilisée.

Les essais sont effectués sur un matériau dont au moins 95% des particules (en masse) ont une taille inférieure au tamis de 4 mm.

Un échantillon de 350 g de matériau brut est tamisé au tamis de 4 mm. Le refus à 4 mm est soumis à un concassage pour obtenir un refus nul à ce tamis, et l'ensemble est mélangé pour obtenir l'échantillon qui va être soumis au test de lixiviation.

Pour les analyses et les tests de lixiviation, la masse de matière sèche ($m_s$) de l'échantillon est déterminée après passage à l'étuve à 105°C $\pm$5°C jusqu'à poids constant conformément à la norme ISO 11465.

## Test de Lixiviation

La prise d'essai de départ $m_{lixi}$ est de 90 g $\pm$ 0,5 g (mesurée avec une précision de 0,1 g) de matière sèche.

L'essai de lixiviation est réalisé à température ambiante soit 20°C $\pm$ 5°C, dans un flacon d'un litre en présence d'une quantité de lixiviant (eau désionisée, 18 M$\Omega$) équivalente à un rapport massique liquide-solide (L/S) de 10 $\pm$ 2%. Le flacon bouché est placé dans un dispositif d'agitation à retournement tournant (*Heidolph REAX 20*) à environ 10 tr/min et agité pendant 24 heures $\pm$ 0,5 h.

En plus des échantillons, des "blancs" de lixiviation sont également effectués.

Après arrêt de l'agitation, les solides en suspension sont laissés décanter pendant 15 min $\pm$ 5min, puis filtrés sous vide sur un filtre à membrane de 0,45 $\mu$m.

L'éluât est ensuite divisé en un nombre approprié de sous échantillons pour les différentes analyses chimiques et conservé selon la norme EN ISO 5667-3.

L'analyse des éléments (métaux lourds) est réalisée par analyse ICP-AES (Spectrométrie d'émission atomique couplée à un plasma induit) (*Iris advantage, Thermo Jarrell Ash*), selon un protocole conforme à la norme NF EN ISO 11885.

L'analyse des anions est réalisée par chromatographie ionique (ICS 2000 Dionex, USA) selon un mode opératoire conforme à la norme NF EN ISO 10304-1.

La fraction soluble (FS) est calculée selon l'équation suivante :

$$Fs = \frac{\left[\, (m_1 - m_0)(0,9 + (0,001\,.m_{lixi}\,.t_{humidité}\,)\right]}{(0,001\,.V_{ext}\,.m_{lixi}\,.(1 - t_{humidité}\,))}$$

$m_1 - m_0 = m_s =$ Masse de l'échantillon séché à l'étuve à 105°C (en gramme)
$m_{lixi} =$ Masse de la prise d'essai pour lixiviation (en gramme)
$t_{humidité} =$ Taux d'humidité de l'échantillon (en gramme)
$V_{ext} =$ Volume prélevé pour mesure de l'extrait sec (en millilitre)

Dans la suite du document FS est exprimée en %. Dans les directives précitées FS est exprimée en mg/kg. La valeur de 1 % équivaut à 10 000 mg/kg.

**Echantillons de référence**

Tous les essais réalisés ici ont été effectués à partir de terre du Port autonome de Paris, terre excavée d'un ancien site industriel où était en activité une usine d'incinération à Issy-les-Moulineaux près de Paris.

La terre du port de Paris constitue un sol pollué, appelé encore matériau contaminé au sens de la présente invention, le substrat étant la terre, et les agents polluants étant les différents éléments ou ions présents en quantités importantes dans cette terre.

**Echantillon 1**

L'échantillon 1 est un échantillon brut de terre du port autonome de Paris. Cet échantillon 1 n'a pas subi de lixiviation. Il renferme une teneur en eau d'environ 15% massique.

**Echantillon 2**

L'échantillon 2 correspond à l'analyse d'un lixiviat de terre du port de Paris.

Les dosages des différents agents polluants présents dans l'échantillon 1 brut et sur le lixiviat (échantillon 2) sont regroupés dans le tableau 2.

Les valeurs des éléments et ions dosés sont exprimées en mg/kg de matière sèche.

La fraction soluble représente la quantité totale d'éléments chimiques passant en solution par rapport à la quantité de matériau sec initial, exprimé en % de matière sèche.

**Tableau 2**

|  | Echantillon 1 | Echantillon 2 |
|---|---|---|
| As | 53 | <0,2 |
| Ba | 769 | 0,471 |
| Cd | 5 | 0,114 |
| Cu | 798 | 0,253 |
| Hg | <3 | <0,1 |
| Ni | 107 | 0,127 |
| Pb | 1454 | 0,115 |
| Sb | 47 | <0,2 |
| Se | <5 | <0,2 |
| Zn | 1163 | 0,375 |
| $Cl^-$ | 68,7 | 68,7 |
| $SO_4^{2-}$ | 9400 | 6 859 |
| FS (Fraction soluble) | - | 1,18 |

Les résultats de ce tableau 2 montrent que les principaux éléments lixiviables, et donc constituant des agents polluants sont les anions, notamment les sulfates et les chlorures. Les teneurs en sulfates lixiviés ont pour conséquence de faire passer la terre en classe II selon la Directive 1999/31/CE du Conseil du 26 avril 1999 pour sa mise en décharge. La valeur de la fraction soluble FS comprise entre 0,4 % et 6 % induit également un classement en catégorie II.

L'échantillon 2 est sélectionné comme référence pour mesurer l'efficacité des différents liants, dans les exemples ci-après.

### Exemple 1 (comparatif)

### Echantillon 3

L'échantillon 3 correspond au traitement d'un échantillon de terre du port de Paris avec 10% (en masse) d'un liant commercialisé par la société Holcim sous le nom commercial Inercem. La quantité d'eau utilisée dans la réalisation de cet échantillon correspond à un rapport Eau / Liant égal à 1.

### Exemple 2

### Echantillon 4

L'échantillon 4 correspond au traitement d'un échantillon de terre du port de Paris avec 10% (en masse) d'un liant hydraulique sulfo-alumineux constitué du clinker 1 (100% de clinker 1). La quantité d'eau utilisée dans la réalisation de cet échantillon correspond à un rapport Eau / Liant égal à 1.

### Exemple 3

### Echantillon 5

L'échantillon 5 correspond au traitement d'un échantillon de terre du port de Paris avec 10% (en masse) d'un liant hydraulique sulfo-alumineux constitué d'un clinker 2 (100% de clinker 2). La quantité d'eau utilisée dans la réalisation de cet échantillon correspond à un rapport Eau / Liant égal à 1.

Les résultats des tests de lixiviation réalisés sur les échantillons 3, 4 et 5, comparés à l'échantillon 2 de référence, sont regroupés dans le tableau 3.

**Tableau 3**

| | Echantillon 2 (référence) | Echantillon 3 (comparatif) | Echantillon 4 (clinker 1) | Echantillon 5 (clinker 2) |
|---|---|---|---|---|
| As | <0,2 | <0,3 | <0,3 | <0,2 |
| Ba | 0,471 | 0,425 | 0,865 | 1,45 |
| Cd | 0,114 | <0,1 | <0,1 | <0,1 |
| Cu | 0,253 | <0.2 | 0,221 | 0,2 |
| Hg | <0,1 | <0,1 | <0,1 | <0,001 |
| Ni | 0,127 | <0,1 | <0,1 | <0,1 |
| Pb | 0,115 | <0,35 | <0,35 | <0,1 |
| Sb | <0,2 | <0,5 | <0,5 | <0,2 |
| Se | <0,2 | <0,4 | <0,4 | <0,2 |
| Zn | 0,375 | <0,2 | <0,2 | <0,1 |
| Cl- | 68,7 | 59 | 56 | 28 |
| $SO_4^{2-}$ | 6 859 | 8968 | 1082 | 951 |
| FS % | 1,18 | 1,32 | 0,52 | 0,57 |

On observe que l'utilisation d'Inercem ne permet pas de diminuer la fraction soluble de la terre, contrairement aux liants hydrauliques sulfo-alumineux selon l'invention.

Plus particulièrement, le traitement avec le liant Inercem ne permet pas d'abaisser la quantité de sulfates entrainés (relargués) dans le lixiviat, contrairement aux traitements avec le liant hydraulique sulfo-alumineux selon l'invention pour lequel la teneur en ions sulfate est divisé d'un facteur 7 environ. Le liant à base de clinker 2 permet en outre d'abaisser la quantité de sulfates entrainés (relargués) sous le seuil de 1000 ppm imposé par la directive (Directive 1999/31/CE du Conseil du 26 avril 1999) pour le déclassement des déchets de catégorie II en catégorie III.

### Exemple 4

### Comparaison de l'efficacité des trois compositions de liant hydraulique

### Echantillon 6

L'échantillon 6 correspond au traitement d'un échantillon de terre du port de Paris avec 20% (en masse) d'un liant hydraulique sulfo-alumineux constitué du clinker 1 (100% de clinker 1).

### Echantillon 7

L'échantillon 7 correspond au traitement d'un échantillon de terre du port de Paris avec 20% (en masse) d'un liant hydraulique sulfo-alumineux constitué du clinker 2 (100% de clinker 2).

### Echantillon 8

L'échantillon 8 correspond au traitement d'un échantillon de terre du port de Paris avec 20% (en masse) d'un liant hydraulique sulfo-alumineux constitué du clinker 3 (100% de clinker 3).

Pour ces trois échantillons 6,7 et 8, la quantité d'eau utilisée correspond à un rapport Eau/Liant égale à 1.

Les résultats des tests de lixiviation des trois échantillons de terre traités par le procédé selon l'invention sont regroupés dans le tableau 4.

**Tableau 4**

|  | Echantillon 2 (référence) | Echantillon 6 (20% clinker 1) | Echantillon 7 (20% clinker 2) | Echantillon 8 (20% clinker 3) |
|---|---|---|---|---|
| As | <0,2 | <0,3 | <0,2 | <0,2 |
| Ba | 0,471 | 0,594 | 1,428 | 1,157 |
| Cd | 0,114 | <0,1 | <0,1 | <0,1 |
| Cu | 0,253 | 0,396 | <0,2 | <0,2 |
| Hg | <0,1 | <0,001 | <0,001 | <0,001 |
| Ni | 0,127 | <0,1 | <0,1 | <0,1 |
| Pb | 0,115 | <0,350 | <0,350 | <0,350 |
| Sb | <0,2 | <0,5 | <0,5 | <0,5 |
| Se | <0,2 | <0,4 | <0,4 | <0,2 |
| Zn | 0,375 | <0,2 | <0,2 | <0,2 |
| Cl- | 68,7 | 36 | 33 | 38 |
| $SO_4^{2-}$ | 6 859 | 817 | 267 | 468 |
| FS % | 1,18 | 0,62 | 0,92 | 0,81 |

On remarque que le traitement avec une forte proportion de liant permet dans chaque cas d'abaisser la quantité de sulfates entrainés (relargués) bien au-dessous du seuil de 1000 ppm imposé par la directive (Directive 1999/31/CE du Conseil du 26 avril 1999) pour le déclassement des déchets.

La teneur en chlorures est divisée par deux dans le lixiviat des sols traités à 20% du liant à base de clinker sulfo-alumineux selon l'invention.

## Exemple 5

Traitement à base de clinker 1 avec différentes proportions de liant

Le tableau 5 regroupe les valeurs présentées dans les tableaux 3 et 4, concernant le liant hydraulique sulfo-alumineux constitué de clinker 1, comparant l'efficacité des traitements du matériau contaminé avec des proportions en liant différentes.

**Tableau 5**

|  | Echantillon 2 (référence) | Echantillon 4 (10% liant) | Echantillon 6 (20% liant) |
|---|---|---|---|
| As | <0,2 | <0,3 | <0,3 |
| Ba | 0,471 | 0,865 | 0,594 |
| Cd | 0,114 | <0,1 | <0,1 |
| Cu | 0,253 | 0,221 | 0,396 |
| Hg | <0,1 | <0,1 | <0,001 |
| Ni | 0,127 | <0,1 | <0,1 |
| Pb | 0,115 | <0,35 | <0,350 |
| Sb | <0,2 | <0,5 | <0,5 |
| Se | <0,2 | <0,4 | <0,4 |
| Zn | 0,375 | <0,2 | <0,2 |
| Cl- | 68,7 | 56 | 36 |
| $SO_4^{2-}$ | 6 859 | 1082 | 817 |
| FS | 1,18 | 0,52 | 0,62 |

On observe que la stabilisation des chlorures et des sulfates est fonction de la quantité de liant utilisé.

## Exemple 6

**Traitement avec différentes proportions de liant à base de clinker 2**

Les échantillons 9, 10 et 11 correspondent au traitement d'un échantillon de terre du port de Paris respectivement avec 5%, 15% et 40% (en masse) d'un liant hydraulique sulfo-alumineux constitué exclusivement de clinker 2. La quantité d'eau utilisée dans la réalisation de ces échantillons correspond à un rapport Eau / Liant égal à 1.

Le tableau 6 regroupe les résultats de ces trois derniers échantillons ainsi que les échantillons 5 et 7 précédents réalisés avec des proportions en liants respectivement de 10% et 20% massique par rapport au matériau contaminé.

**Tableau 6**

| % liant | Echantillon 9 (5%) | Echantillon 5 (10%) | Echantillon 10 (15%) | Echantillon 7 (20%) | Echantillon 11 (40%) |
|---|---|---|---|---|---|
| As | <0,2 | <0,2 | <0,2 | <0,2 | <0,2 |
| Ba | 1,4 | 1,45 | 1,445 | 1,428 | 1,146 |
| Cd | <0,1 | <0,1 | <0,1 | <0,1 | <0,1 |
| Cu | <0,2 | 0,2 | <0,2 | <0,2 | <0,2 |
| Hg | <0,001 | <0,001 | <0,001 | <0,001 | <0,001 |
| Ni | <0,1 | <0,1 | <0,1 | <0,1 | <0,1 |
| Pb | <0,1 | <0,1 | <0,1 | <0,350 | 0,178 |
| Sb | <0,2 | <0,2 | <0,2 | <0,5 | <0,2 |

(suite)

| % liant | Echantillon 9 (5%) | Echantillon 5 (10%) | Echantillon 10 (15%) | Echantillon 7 (20%) | Echantillon 11 (40%) |
|---|---|---|---|---|---|
| Se | <0,2 | <0,2 | <0,2 | <0,4 | <0,2 |
| Zn | <0,1 | <0,1 | <0,1 | <0,2 | <0,1 |
| $Cl^-$ | 44 | 28 | 26 | 33 | 25 |
| $SO_4^{2-}$ | 2 662 | 951 | 640 | 267 | 238 |
| FS | 0,68 | 0,57 | 0,68 | 0,92 | 0,77 |

On observe également avec ce liant que la stabilisation des sulfates de la terre est fonction de la quantité de liant hydraulique sulfo-alumineux utilisé. L'évolution des concentrations des sulfates dans les lixiviats des terres traitées montre que l'efficacité de la stabilisation augmente de manière importante avec la quantité de liant hydraulique sulfo-alumineux utilisé pour le traitement. Au-delà de 10%, la stabilisation des sulfates s'améliore également mais avec une évolution plus faible.

Ces résultats sont schématisés sur la figure annexée. Le graphique représente la variation de teneur en ions sulfates exprimée en ppm (ou mg/kg de matériau traité) dans le lixiviat (représenté sur l'axe des ordonnées), en fonction du pourcentage massique de liant hydraulique à base de clinker 2 utilisé pour traiter le sol contaminé (représenté sur l'axe des abscisses).

**Exemple 7**

Un nouveau prélèvement de terre du port de Paris a été effectué dans une autre zone de ce terrain pollué et divisé en plusieurs fractions.

Une première fraction (échantillon 12) brute a subi une lixiviation dans les mêmes conditions que précédemment, et constitue la référence pour cet exemple 7.

Une seconde fraction (échantillon 13) a été traitée selon le procédé de l'invention par 10% de liant hydraulique renfermant 70% de clinker 2 et 30% de ciment Portland blanc de type CEM I 52,5 N, puis soumis à une lixiviation.

Les résultats des analyses réalisées sur ces deux lixiviats sont présentés dans le tableau 7.

Ces résultats montrent que même à 70% de clinker dans le liant hydraulique, la teneur en sulfates dans le lixiviat est divisée par 6, et la teneur en chlorures divisée par 2.

**Tableau 7**

| | Echantillon 12 (référence) | Echantillon 13 (10% liant) |
|---|---|---|
| As | <0,2 | <0,2 |
| Ba | 0,39 | 0,52 |
| Cd | <0,1 | <0,1 |
| Cu | 0,21 | 0,51 |
| Hg | <0,1 | <0,1 |
| Ni | <0,1 | <0,1 |
| Pb | <0,1 | <0,1 |
| Sb | 0,22 | <0,2 |
| Se | <0,2 | <0,2 |
| Zn | 0,33 | <0,2 |
| $Cl^-$ | 62 | 27 |
| $SO_4^{2-}$ | 10 274 | 1 547 |
| FS | 1,35 | 0,55 |

L'ensemble des résultats de ces essais démontre clairement que le clinker ci-dessus est apte, mélangé en faible concentration (notamment inférieure à 15 % massique) à un matériau pollué, en particulier par des ions sulfate et chlorure, à réduire considérablement leur teneur dans le lixiviat, contribuant ainsi à l'inertage de ce matériau, sans nécessiter son enrobage.

**Exemple 8** : **Traitement avec des phases minéralogiques pures**

Un troisième lot de terre du port de Paris est considéré dans l'exemple 8. Une fraction brute a subi une lixiviation dans les mêmes conditions que précédemment, et constitue la référence (échantillon 14) pour cet exemple 8.

Les échantillons 15 à 19 correspondent aux résultats de lixiviation de fractions du même troisième lot de terre du port de Paris, mais traités avec des liants obtenus à partir de phases minéralogiques pures et éventuellement de chaux vive. C'est-à-dire que les clinkers utilisés ne proviennent pas d'un four de cimenterie mais d'un laboratoire. Ces échantillons sont comparés à l'échantillon de référence 14.

L'échantillon 15 correspond au traitement d'un échantillon de terre du port de Paris (même source que l'échantillon de référence 14) avec 5 % (en masse) d'un liant hydraulique selon l'invention renfermant 20 % de Yeelimite (Y), 50% de Mayenite (M) et 30% de chaux vive (CaO) (20% Y / 50% M / 30% CaO). La quantité d'eau utilisée dans la réalisation de cet échantillon correspond à un rapport Eau / Liant égal à 1. Les résultats d'analyse du lixiviat sont présentés dans le tableau 8.

L'échantillon 16 correspond au traitement selon l'invention d'un échantillon de terre du port de Paris (même source que l'échantillon de référence 14) avec 5 % (en masse) d'un liant hydraulique renfermant 20 % de Yeelimite, 70% de Mayenite et 10% de chaux vive (20% Y / 70% M / 10% CaO). La quantité d'eau utilisée dans la réalisation de cet échantillon correspond à un rapport Eau / Liant égal à 1. Les résultats d'analyse du lixiviat sont présentés dans le tableau 8.

**Tableau 8**

|  | Echantillon 14 (référence) | Echantillon 15 (20% Y / 50% M / 30% CaO) | Echantillon 16 (20% Y / 70% M / 10% CaO) |
|---|---|---|---|
| As | <0,2 | <0,2 | <0,2 |
| Ba | 0,438 | 0,754 | 1,501 |
| Cd | <0,1 | <0,04 | <0,04 |
| Cu | <0,2 | 0,276 | 0,109 |
| Hg | 0,004 | 0,011 | 0,011 |
| Ni | <0,1 | <0,05 | <0,05 |
| Pb | <0,1 | 0,636 | <0,1 |
| Sb | <0,2 | <0,06 | <0,06 |
| Se | <0,2 | <0,08 | <0,08 |
| Zn | <0,2 | <0,05 | <0,05 |
| Cl⁻ | 181 | 115 | 118 |
| $SO_4^{2-}$ | 4696 | 320 | 59 |
| FS | 0,91 | 0,87 | 1,44 |

L'échantillon 17 correspond au traitement selon l'invention d'un échantillon de terre du port de Paris (même source que l'échantillon de référence 14) avec 5 % (en masse) d'un liant hydraulique renfermant 50 % de Yeelimite et 50% de Mayenite (50% Y / 50% M) sans ajout de chaux. La quantité d'eau utilisée dans la réalisation de cet échantillon correspond à un rapport Eau / Liant égal à 1. Les résultats d'analyse du lixiviat sont présentés dans le tableau 9.

L'échantillon 18 correspond au traitement selon l'invention d'un échantillon de terre du port de Paris (même source que l'échantillon de référence 14) avec 5 % (en masse) d'un liant hydraulique renfermant 40 % de Yeelimite, 40% de Mayenite et 20% de chaux vive (40% Y / 40% M / 20% CaO). La quantité d'eau utilisée dans la réalisation de cet échantillon correspond à un rapport Eau / Liant égal à 1. Les résultats d'analyse du lixiviat sont présentés dans le tableau 9.

L'échantillon 19 correspond au traitement selon l'invention d'un échantillon de terre du port de Paris (même source que l'échantillon de référence 14) avec 5 % (en masse) d'un liant hydraulique renfermant 30 % de Yeelimite, 30% de Mayenite et 40% de chaux vive (30% Y / 30% M / 40% CaO). La quantité d'eau utilisée dans la réalisation de cet échantillon correspond à un rapport Eau / Liant égal à 1. Les résultats d'analyse du lixiviat sont présentés dans le tableau 9.

**Tableau 9**

|  | Echantillon 14 (référence) | Echantillon 17 (ref) (50% Y / 50% M) | Echantillon 18 (40% Y / 40% M / 20% CaO) | Echantillon 19 (30% Y / 30% M / 40% CaO) |
|---|---|---|---|---|
| As | <0,2 | <0.2 | <0.2 | <0.2 |
| Ba | 0,438 | 0,408 | 0,650 | 0,768 |
| Cd | <0,1 | <0,05 | <0,05 | <0,05 |
| Cu | <0,2 | 0,172 | 0,172 | 0,451 |
| Hg | 0,004 | 0,073 | 0,005 | 0,004 |
| Ni | <0,1 | <0,05 | <0,05 | <0,05 |
| Pb | <0,1 | <0,1 | <0,1 | <0,1 |
| Sb | <0,2 | <0,1 | <0,1 | <0,1 |
| Se | <0,2 | <0,1 | <0,1 | <0,1 |
| Zn | <0,2 | 0,061 | <0,05 | <0,05 |
| $Cl^-$ | 181 | 174 | 154 | 122 |
| $SO_4^{2-}$ | 4696 | 1 011 | 364 | 305 |
| FS | 0,91 | 0,66 | 1,14 | 0,76 |

On constate que la combinaison des trois constituants Yeelimite, Mayenite et chaux est optimale pour le piégeage des ions sulfate.

## Revendications

1. Procédé de traitement de sols pollués, notamment de sols présentant une fraction lixiviable supérieure à 0,4%, ladite fraction lixiviable renfermant majoritairement des anions, notamment des ions sulfates, et/ou des cations de métaux lourds,
**caractérisé en ce que** ledit procédé comprend le mélange du dit sol avec un liant hydraulique, dans des proportions massiques sol/liant comprises entre 1 et 40 parties de liant pour 100 parties de sol, ledit liant hydraulique étant à base de clinker sulfo-alumineux, ledit clinker comprenant les phases minéralogiques Yeelimite $C_4A_3\$$, Mayenite $C_{12}A_7$, de la chaux libre CaO et éventuellement de la Bélite $C_2S$,
**caractérisé en ce que** dans ledit clinker les phases minéralogiques Yeelimite $C_4A_3\$$, Mayenite $C_{12}A_7$, et la chaux libre sont présentes dans les proportions suivantes :

   - de 20% à 50% massique de phase Yeelimite $C_4A_3\$$,
   - de 5% à 80% massique de phase Mayenite $C_{12}A_7$,
   - et de 1 à 5% massique de chaux libre CaO, et

   le rapport massique entre les phases Mayenite $C_{12}A_7$ et Yeelimite $C_4A_3\$$ étant compris entre 0,1 et 10.

2. Procédé de traitement selon la revendication 1, **caractérisé en ce qu'**il comprend le mélange du dit sol avec le liant hydraulique, dans des proportions massiques sol/liant comprises entre 1 et 20 parties, de préférence de 2 à 20 parties, de préférence encore de 5 à 20 parties de liant pour 100 parties de sol.

3. Procédé de traitement selon l'une des revendications 1 ou 2, **caractérisé en ce que** le clinker sulfo-alumineux comprend de 5% à 50% massique de phase Mayenite $C_{12}A_7$, le rapport massique entre les phases Mayenite $C_{12}A_7$ et Yeelimite $C_4A_3\$$ étant compris entre 0,1 et 2,5.

4. Procédé de traitement selon l'une quelconque des revendications précédentes, **caractérisé en ce que** dans le clinker le rapport massique entre les phases Mayenite $C_{12}A_7$ et Yeelimite $C_4A_3\$$ est compris entre 0,15 et 1,5.

5. Procédé de traitement selon l'une quelconque des revendications précédentes, **caractérisé en ce que** le clinker comprend en outre jusqu'à 5% massique de phase CaO, $SO_3(C\$)$

6. Procédé de traitement selon l'une quelconque des revendications précédentes, **caractérisé en ce que** le clinker renferme moins de 0,5% massique de phase CaO, $2Al_2O_3(CA_2)$ et moins de 0,5% massique de phase 2CaO, $Al_2O_3$, $SO_3(C_2AS)$.

7. Procédé de traitement selon l'une quelconque des revendications précédentes, **caractérisé en ce que** le liant hydraulique renferme au moins 20%, de préférence au moins 30%, massique de clinker sulfo-alumineux, et un ou plusieurs composé(s) choisi(s) parmi du ciment, du clinker Portland, de la chaux, notamment de la chaux vive, un filler, des additions à effet pouzzolanique telles que du laitier, de la cendre volante, de la fumée de silice, de la pouzzolane, et éventuellement un ou plusieurs adjuvants tels qu'un accélérateur de prise et/ou un réducteur de chrome.

8. Procédé de traitement selon la revendication 7,
**caractérisé en ce que** le liant hydraulique renferme de la chaux vive, notamment moins de 50% massique de chaux.

9. Utilisation du procédé selon l'une quelconque des revendications précédentes pour la stabilisation de sols pollués *in situ* ou avant mise en décharge, sols pollués notamment par des ions sulfate et/ou des ions chlorure et/ou des cations de métaux lourds.

10. Utilisation du procédé selon la revendication 9 pour la stabilisation de sols renfermant une teneur en eau inférieure à 40% massique, de préférence inférieure à 30% massique.

11. Utilisation du sol traité selon l'une quelconque des revendications 1 à 8 dans des sous-couches routières ou des remblais.

**Patentansprüche**

1. Verfahren zur Behandlung verunreinigter Böden, insbesondere von Böden, die eine herauslösbare Fraktion von über 0,4 % aufweisen, wobei die herauslösbare Fraktion mehrheitlich Anionen einschließt, insbesondere Sulfationen, und/oder Kationen von Schwermetallen,
**dadurch gekennzeichnet, dass** das Verfahren das Mischen des Bodens mit einem hydraulischen Bindemittel in Massenanteilen Boden/Bindemittel zwischen 1 und 40 Teilen Bindemittel auf 100 Teile Boden umfasst, wobei das hydraulische Bindemittel auf der Basis von Sulfoaluminat-Klinker ist, wobei der Klinker mineralogische Phasen Yeelimit $C_4A_3\$$, Mayenit $C_{12}A_7$, freien Kalk CaO und eventuell Belit $C_2S$ umfasst,
**dadurch gekennzeichnet, dass** in dem Klinker die mineralogischen Phasen Yeelimit $C_4A_3\$$, Mayenit $C_{12}A_7$ und der freie Kalk in den folgenden Anteilen vorhanden sind:

- von 20 bis 50 Ma% Yeelimit-Phase $C_4A_3\$$,
- von 5 bis 80 Ma% Mayenit-Phase $C_{12}A_7$,
- und von 1 bis 5 Ma% freier Kalk CaO, und

das Massenverhältnis zwischen den Phasen Mayenit $C_{12}A_7$ und Yeelimit $C_4A_3\$$ zwischen 0,1 und 10 liegt.

2. Behandlungsverfahren nach Anspruch 1, **dadurch gekennzeichnet, dass** es das Mischen des Bodens mit dem hydraulischen Bindemittel in den Massenanteilen Boden/Bindemittel zwischen 1 und 20 Teilen, vorzugsweise von 2 bis 20 Teilen, vorzugsweise auch von 5 bis 20 Teilen Bindemittel auf 100 Teile Boden umfasst.

3. Behandlungsverfahren nach einem der Ansprüche 1 oder 2, **dadurch gekennzeichnet, dass** der Sulfoaluminat-Klinker 5 bis 50 Ma% Mayenit-Phase $C_{12}A_7$ umfasst, wobei das Massenverhältnis zwischen den Phasen Mayenit $C_{12}A_7$ und Yeelimit $C_4A_3\$$ zwischen 0,1 und 2,5 liegt.

4. Behandlungsverfahren nach einem der vorangehenden Ansprüche, **dadurch gekennzeichnet, dass** in dem Klinker das Massenverhältnis zwischen den Phasen Mayenit $C_{12}A_7$ und Yeelimit $C_4A_3\$$ zwischen 0,15 und 1,5 liegt.

5.  Behandlungsverfahren nach einem der vorangehenden Ansprüche, **dadurch gekennzeichnet, dass** der Klinker ferner bis zu 5 Ma% Phase CaO, $SO_3$(C$) umfasst.

6.  Behandlungsverfahren nach einem der vorangehenden Ansprüche, **dadurch gekennzeichnet, dass** der Klinker unter 0,5 Ma% Phase CaO, $2Al_2O_3$($CA_2$) und unter 0,5 Ma% Phase 2CaO, $Al_2O_3$, $SO_3$($C_2$AS) einschließt.

7.  Behandlungsverfahren nach einem der vorangehenden Ansprüche, **dadurch gekennzeichnet, dass** das hydraulische Bindemittel mindestens 20 Ma%, vorzugsweise mindestens 30 Ma%, Sulfoaluminat-Klinker einschließt und eine oder mehrere Verbindungen, die aus dem Zement, dem Portland-Klinker, dem Kalk, insbesondere dem Branntkalk, einem Filler, den Zuschlägen mit Puzzolanwirkung wie dem Mörtel, der Flugasche, dem Quarzstaub, Puzzolan ausgewählt sind, und eventuell einen oder mehrere Hilfsstoffe wie einen Bindebeschleuniger und/oder ein Chromreduktionsmittel.

8.  Behandlungsverfahren nach Anspruch 7,
    **dadurch gekennzeichnet, dass** das hydraulische Bindemittel Branntkalk, insbesondere unter 50 Ma% Kalk, einschließt.

9.  Verwendung des Verfahrens nach einem der vorangehenden Ansprüche für die Stabilisierung von verunreinigten Böden *in situ* oder vor der Verbringung auf die Deponie, Böden, die insbesondere durch Sulfationen und/oder Chloridionen und/oder Kationen von Schwermetallen verunreinigt sind.

10. Verwendung des Verfahrens nach Anspruch 9 für die Stabilisierung von Böden, die einen Gehalt an Wasser unter 40 Ma%, vorzugsweise unter 30 Ma%, einschließen.

11. Verwendung des nach einem der Ansprüche 1 bis 8 behandelten Bodens in Unterschichten von Straßen oder Schüttungen.

**Claims**

1.  Method for treating polluted soils, in particular soils having a leachable fraction higher than 0.4 %, said leachable fraction mostly containing anions, in particular sulfate ions and/or heavy metal cations,
    **characterized in that** said method comprises mixing said soil with a hydraulic binder in soil/binder weight proportions of between 1 and 40 parts binder per 100 parts soil, said hydraulic binder being sulfoaluminate clinker-based, said clinker comprising Yeelimite $C_4A_3\$$, Mayenite $C_{12}A_7$, free lime CaO and optionally Belite $C_2$S mineralogical phases, **characterized in that**, in said clinker, the mineralogical phases Yeelimite $C_4A_3\$$, Mayenite $C_{12}A_7$ and free lime are contained in the following proportions:

    - from 20 to 50 weight % of Yeelimite phase, $C_4A_3\$$,
    - from 5 to 80 weight % of Mayenite phase, $C_{12}A_7$
    - and from 1 to 5 weight % of free lime CaO; and

    the weight ratio between the phases being between 0.1 and 10.

2.  The treatment method according to claim 1, **characterized in that** it comprises mixing said soil with the hydraulic binder in soil/binder weight proportions of between 1 and 20 parts, preferably 2 to 20 parts, more preferably 5 to 20 parts binder per 100 parts soil.

3.  The treatment method according to one of claims 1 or 2, **characterized in that** the sulfoaluminate clinker comprises 5 to 50 weight % of Mayenite phase $C_{12}A_7$, the weight ratio between the Mayenite $C_{12}A_7$ and Yeelimite $C_4A_3\$$ phases being between 0.1 and 2.5.

4.  The treatment method according to any of the preceding claims **characterized in that**, in the clinker, the weight ratio between the Mayenite $C_{12}A_7$ and Yeelimite $C_4A_3\$$ phases is between 0.15 and 1.5.

5.  The treatment method according to any of the preceding claims, **characterized in that** the clinker also contains up to 5 weight % of CaO, $SO_3$ (C$) phase.

6. The treatment method according to any of the preceding claims, **characterized in that** the clinker contains less than 0.5 weight % of CaO, $2Al_2O_3(CA_2)$ phase and less than 0.5 weight % of 2CaO, $Al_2O_3$, $SO_3(C_2AS)$ phase.

7. The treatment method according to any of the preceding claims, **characterized in that** the hydraulic binder contains at least 20 weight %, preferably at least 30 weight % of sulfoaluminate clinker and one or more compounds selected from among cement, Portland clinker, lime in particular quicklime, a filler, additions having pozzolanic effect such as slag, fly ash, silica fume, pozzolan, and optionally one or more admixtures such as a set accelerator and/or chromium reducer.

8. The treatment method according to claim 7,
**characterized in that** the hydraulic binder contains quicklime, in particular less than 50 weight % of lime.

9. Use of the method according to any of the preceding claims for stabilisation of soils *in situ* or before landfill disposal, in particular soils polluted with sulfate ions and/or chlorine ions and/or heavy metal cations.

10. The use according to claim 9 for the stabilisation of soils having a water content of less than 40 weight % preferably less than 30 weight %.

11. Utilisation of the soil treated according to any of claims 1 to 8 in roadway sub-bases or backfill.

**FIGURE UNIQUE**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0588689 A
- WO 2010043495 A
- FR 2901270

**Littérature non-brevet citée dans la description**

- *Acceptabilité de matériaux alternatifs en technique routière. Evaluation environnementale,* Mars 2011
- Inercem Liants hydrauliques pour stabilisation des déchets courants. *Holcim Belgique,* Février 2009
- **IVAN OLDER.** Special Inorganic Cement. E&FN Spon, 2000